Europäisches Patentamt

European Patent Office

Office européen des brevets

(19)

(11) Veröffentlichungsnummer: **0 286 038**
**B1**

(12)                    EUROPÄISCHE PATENTSCHRIFT

(45) Veröffentlichungstag der Patentschrift:
14.11.90

(51) Int. Cl.⁵: **B60R 7/04**, B60N 3/00

(21) Anmeldenummer: 88105334.2

(22) Anmeldetag: 01.04.88

(54) Ablage für Kraftfahrzeuge, insbesondere im Tunnelbereich eines Lastkraftwagens zwischen Fahrer- und Beifahrersitz.

(30) Priorität: 01.04.87 DE 3711001

(43) Veröffentlichungstag der Anmeldung:
12.10.88 Patentblatt 88/41

(45) Bekanntmachung des Hinweises auf die Patenterteilung:
14.11.90 Patentblatt 90/46

(84) Benannte Vertragsstaaten:
DE ES FR GB NL SE

(56) Entgegenhaltungen:
EP-A- 0 219 632
DE-A- 3 501 714
FR-A- 2 549 787
GB-A- 2 054 480
US-A- 3 347 591
US-A- 3 717 111

(73) Patentinhaber: Iveco Magirus Aktiengesellschaft,
Schillerstrasse 2 Postfach 27 40, D-7900 Ulm/Donau(DE)

(72) Erfinder: Maier, Richard, Tomerdinger Strasse 37,
D-7909 Dornstadt(DE)

(74) Vertreter: Socha, Peter, Dipl.-Ing., Iveco Magirus AG
Patentabteilung Schillerstrasse 2, D-7900 Ulm(DE)

## Beschreibung

Die Erfindung betrifft eine Ablage für Kraftfahrzeuge, insbesondere im Tunnelbereich eines Lastkraftwagens zwischen Fahrer- und Beifahrersitz, mit einem Tischelement gemäß Oberbegriff des Anspruchs 1.

Aus DE-OS 35 01 714 ist eine vorgenannte Ablage bekannt, die einen Kastenaufsatz aufweist, der bezüglich einer fahrerhausfesten Unterlage längsverschieblich ist. Der Kastenaufsatz besteht aus einer Staubox aus zwei schräg zueinander verschieblichen Einzelteilen, so daß er in Richtung längs der unteren Ablage verschoben und auch das obere schräg verschiebliche Ablageteil der Staubox durch Schrägverschiebung angehoben werden kann. Das obere Ablageteil der Staubox kann in seiner vordersten Hochlage gegebenenfalls auf der Oberseite der Fahrerhausbrüstung abgestützt sein. Obgleich die bekannte Anordnung eine variable Mehrzweck-Konstruktion in Modulbauweise schafft, die als Aufstiegshilfe für eine hintere Fahrerhausliege verwendet werden kann, ist diese vergleichsweise aufwendig konzipiert und für kleinere bzw. kurze Fahrerhauskabinen schlecht geeignet, da sie vergleichsweise viel Raum einnimmt.

Einen vergleichsweise großen Raumbedarf benötigt auch die bekannte aufklappbare Ablage gemäß DE-PS 32 45 394, die einen nach oben ragenden Tritt zum Besteigen der oberen Liege aufweist. Der Tritt ist jedoch zu weit entgegen der Fahrtrichtung hinten in der Fahrerhauskabine gelegen, so daß ein Besteigen der oberen Liege höchst unbequem ist. Auch besitzt letztgenannte Ablage einen störenden hochragenden Tritt, selbst im eingeklappten Zustand.

Aufgabe der Erfindung ist die Schaffung einer Ablage der eingangs genannten Art, die sehr kompakt aus wenigen Einzelteilen aufgebaut ist, wobei das Tischelement der Ablage trotz einfachen Aufbaus höchst betriebssicher als Aufstiegshilfe insbesondere bei kurzen Fahrerhauskabinen verwendet werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 11.

Die Erfindung sieht mithin zwischen Fahrer- und Beifahrersitz insbesondere einer Fahrerhauskabine eines Lastkraftwagens eine Ablage mit einem Tischelement vor, das im heruntergeklappten Zustand vorzugsweise in einer Mulde der Mittelkonsole vorgesehen ist. Das Tischelement ist an seinem armaturenbrettfernen Ende an einer Abstütz-/Schwenkeinrichtung angelenkt, wobei zwischen der letztgenannten Schwenkeinrichtung und der Mittelkonsole bzw. der fahrerhausfesten Unterlage eine Teleskopanordnung angelenkt ist. Das Tischelement kann durch einfaches manuelles Anheben in seine Hochlage geschwenkt und auf dem Armaturenbrett an der vorderen unteren Seite abgestützt werden. In dieser Lage ist das Tischelement in Fahrzeuglängsrichtung arretiert, und zwar durch eine unterseitige Queraussparung des Tischelements, die mit dem Armaturenbrett in der Hochlage des Tischelements in Eingriff steht. Arretiert ist das Tischelement in seiner Hochlage ferner durch die Teleskopanordnung, die aus zwei Teleskoparmen besteht, von denen der eine Teleskoparm einen Arretierbolzen aufweist, der in der Hochlage des Tischelements mit einer federvorgespannten Arretierlasche am anderen Teleskoparm selbsttätig in Eingriff bringbar und von Hand aus diesem Eingriff wieder lösbar ist. Das Tischelement ist aufgrund seines einfachen Aufbaus mit Hilfe einfacher Mittel derart statisch bestimmt und somit stabil, daß es im hochgeschwenkten Zustand ohne konstruktive Änderungen neben seiner Ablagefunktion im gleichen Maße auch Trittfunktion zu einer oberen hinteren Liege besitzt.

Besonderer Vorteil der Erfindung ist der geringe Raumbedarf beim Schwenken des Tischelements. Die Ablage besitzt keine sperrigen oder störend herausragenden Teile. Die Schwenkbeweglichkeit wird durch einfache Mechanik realisiert, die einfachste Bedienung zuläßt. Insbesondere hervorzuheben ist die selbsttätige Arretierung im hochgeschwenkten Zustand. Das Tischelement befindet sich in seiner Hochlage praktisch im Bereich des Armaturenbretts. Es eignet sich mithin besonders zum Aufsteigen zu einer oberen Liege bei kurzen Fahrerhäusern. In der Tieflage des Tischelements ist ein einfacher Durchstieg zwischen den Fahrerhaussitzen möglich.

Die Erfindung wird nachfolgend anhand eines Ausführungsbeispiels unter Bezugnahme auf die beigefügte Zeichnung näher erläutert; es zeigen:

Fig. 1 eine Ablage mit einem Tischelement in seiner hinteren Tieflage in perspektivischer schematischer Ansicht zwischen Fahrer- und Beifahrersitz eines Lastkraftwagens,

Fig. 2 eine der Fig. 1 ähnliche perspektivische Ansicht mit einer Ablage, deren Tischelement sich in seiner vorderen Hochlage befindet,

Fig. 3 eine schematische Seitenansicht auf die Ablage gemäß Fig. 2, und

Fig. 4 die Einzelheit IV der Fig. 3 in vergrößerter Vertikalschnittansicht.

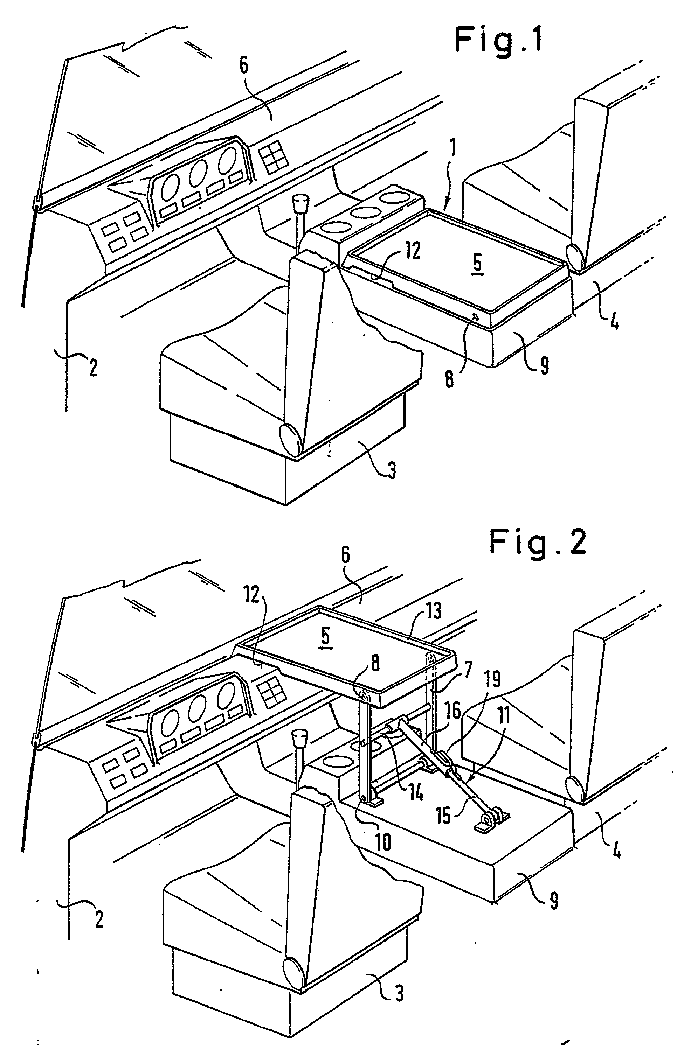

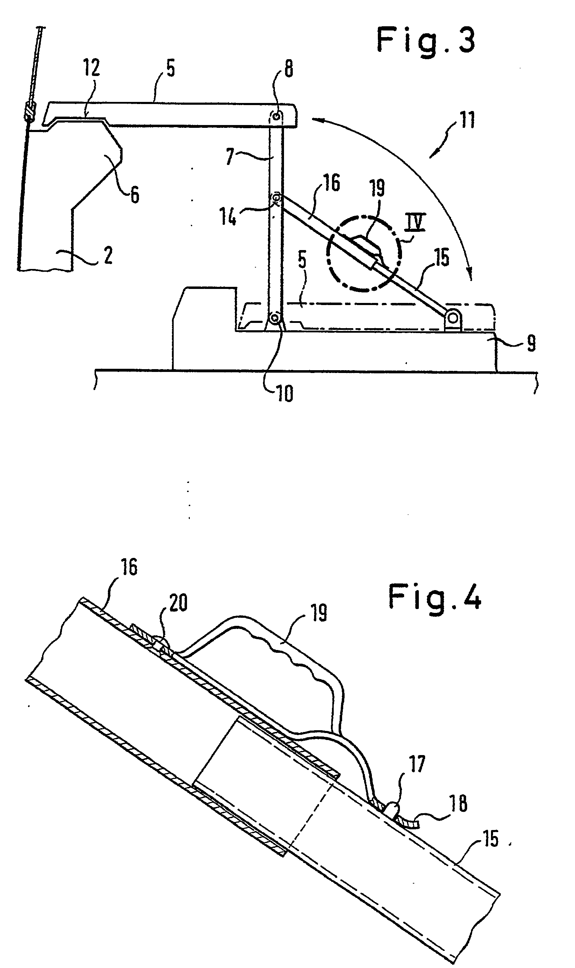

Gemäß Zeichnung befindet sich im Tunnelbereich eines Lastkraftwagens (2) zwischen Fahrer- und Beifahrersitz (3, 4) eine Ablage (1) mit einem Tischelement (5), das aus einer in Fahrzeuglängsrichtung hinten gelegenen tiefen im wesentlichen horizontalen Lage gemäß Fig. 1 in eine vordere höhere im wesentlichen horizontale Lage gemäß den Fig. 2 und 3 verstellbar ist, wobei sich das Tischelement (5) in seiner vorderen Hochlage auf dem Armaturenbrett bzw. der Fahrerhausbrüstung (6) unterseitig abstützt.

Das Tischelement (5) ist als einfache rechteckige Platte aus stabilem Material konzipiert und besitzt einen oberen geschlossenen Umfangsrand (13). An seiner vorderen Unterseite ist es mit einer Queraussparung (12) versehen, die der oberseitigen Querkonfiguration der Fahrerhausbrüstung (6) angepaßt ist und bei hochgeschwenktem Tischelement (5) eine satte vordere Auflage mit Arretierfunktion in Fahrzeuglängsrichtung bewirkt.

Im Bereich seiner hinteren Kante ist an der Unterseite des Tischelements (5) das eine Ende einer Schwenkeinrichtung (7) angelenkt, die ihrerseits mit ihrem anderen Ende an einer fahrerhausfesten Unterlage (9) oder Mittelkonsole angelenkt ist, und zwar durch eine erste Querachse (8) auf der Tischelementseite und durch eine zweite Querachse (10) auf der Unterlagenseite.

Die Schwenkeinrichtung (7) ist als U-förmiger Bügel oder gemäß Zeichnung leiterartig aufgebaut und besitzt die Querstrebe (14) oder Sprosse, die zentral an einer in Fahrzeuglängsrichtung sich erstreckenden Teleskopanordnung (11) angelenkt ist, die auf der anderen Seite mit der fahrerhausfesten Unterlage schwenkbar verbunden ist. Die Teleskopanordnung (11) umfaßt zwei Teleskoparme (15, 16), von denen der eine Teleskoparm (15) an seinem nicht angelenkten Ende einen Arretierbolzen (17) und der andere Teleskoparm (16) eine federvorgespannte Arretierlasche (18) mit einem Handgriff (19) besitzt. Die federvorgespannte Arretierlasche (18) einschließlich Handgriff (19) sind durch eine Nietverbindung (20) mit dem zweiten Teleskoparm (16) verbunden, wie dies insbesondere der Fig. 4 zu entnehmen ist.

Die fahrerhausfeste Unterlage (9) besitzt ferner an ihrer vorderen oberen Querseite einen erhabenen Kastenbereich zur Aufnahme von Trinkgefäßen. Der erhabene Kastenbereich ist so ausgebildet, daß er formschön und funktionsgerecht mit einem Tischelement (5) gemäß Fig. 1 zusammenwirkt. Bei einem hochgehobenen Tischelement (5) gemäß Fig. 2 werden aufgenommene Trinkgefäße geschützt.

Ersichtlich ist die Ablage (1) aus wenigen kompakten Einzelteilen aufgebaut. Sie besitzt eine einfache Schwenkmechanik mit einfachster Bedienung, gegebenenfalls durch eine Hand einer Bedienungsperson.

Für ein Verschwenken des Tischelements (5) aus der in Fig.1 gezeigten in die in der Fig. 2 gezeigte Position wird das Tischelement (5) einfach an seinem vorderen Ende im Bereich der Queraussparung (12) angehoben. Das zwangsgeführte Tischelement (5) wird in seiner Hochlage mit der Queraussparung (12) auf dem Armaturenbrett bzw. der Fahrerhausbrüstung (6) positioniert. In dieser Stellung rastet die Arretierlasche (18) selbsttätig in den Arretierbolzen (17) ein. Die Schwenkeinrichtung (7) führt eine 90°-Schwenkbewegung aus und nimmt bei einem hochgeschwenkten Tischelement (5) im wesentlichen eine Vertikallage ein in einer Weise, daß das Tischelement (5) stabil am armaturenbrettfernen Ende unterseitig abge stützt wird. In dieser Lage dient das Tischelement (5) insbesondere als Aufstiegshilfe zu einer hinteren Fahrerhausliege. Für einen rutschfesten Tritt kann eine rutschsichere verschleißfeste Einlage an der Oberseite des Tischelements (5) angebracht sein.

Für eine Verstellung der Ablage aus der in Fig. 2 gezeigten in die in der Fig. 1 gezeigte Position wird durch Betätigen des Handgriffs (19) die Riegelverbindung zwischen Arretierbolzen (17) und Arretierlasche (18) kurzzeitig gelöst und das Tischelement (5) von Hand einfach wieder in die tiefe horizontale hintere Lage gemäß Fig. 1 gebracht. In letztgenannter Lage liegt das Tischelement (5) satt auf der fahrerhausfesten Unterlage (9) auf. Gegebenenfalls kann zwischen Unterlage (9) und Tischelement (5) eine Steckverbindung vorgesehen sein, die ein Klappern während der Fahrt unterbindet.

**Patentansprüche**

1. Ablage (1) für Kraftfahrzeuge, insbesondere im Tunnelbereich eines Lastkraftwagens (2) zwischen Fahrer- und Beifahrersitz (3, 4) mit einem Tischelement (5), das aus einer in Fahrzeuglängsrichtung hinten gelegenen tiefen im wesentlichen horizontalen Lage in eine vordere höhere im wesentlichen horizontale Lage verstellbar ist, in der es sich auf der vorderen Fahrerhausbrüstung (6) abstützt, dadurch gekennzeichnet, daß das Tischelement (5) im Bereich seiner hinteren Kante an einer Schwenkeinrichtung (7) um eine erste Querachse (8) angelenkt ist, wobei die Schwenkeinrichtung (7) ihrerseits an einer fahrerhausfesten Unterlage (9) um eine zweite Querachse (10) angelenkt ist, und daß zwischen Unterlage (9) und Schwenkeinrichtung (7) eine Teleskopanordnung (11) vor gesehen ist, die die Schwenkeinrichtung (7) einschließlich Tischelement (5) in dessen hochgehobener an der vorderen Fahrerhausbrüstung (6) abgestützten Lage arretiert.

2. Ablage nach Anspruch 1, dadurch gekennzeichnet, daß in der hochgehobenen an der vorderen Fahrerhausbrüstung (6) abgestützten Lage des Tischelements (5) die Schwenkeinrichtung (7) im wesentlichen vertikal angeordnet ist.

3. Ablage nach Anspruch 1 oder 2, dadurch gekennzeichnet, daß die Schwenkeinrichtung (7) ein U-förmiger Bügel ist, dessen freie Enden die erste Querachse (8) und dessen Basis die zweite Querachse (10) bestimmen.

4. Ablage nach einem der Ansprüche 1 bis 3, dadurch gekennzeichnet, daß das Tischelement (5) an seiner Unterseite eine vordere Queraussparung (12) aufweist, die in einen Abstützeingriff mit der Oberseite der Fahrerhausbrüstung (6) bringbar ist (Fig. 2,3).

5. Ablage nach Anspruch 4, dadurch gekennzeichnet, daß die Queraussparung (12) ein in seiner Hochlage befindliches Tischelement (5) in Fahrzeuglängsrichtung arretiert.

6. Ablage nach einem der Ansprüche 1 bis 5, dadurch gekennzeichnet, daß das Tischelement (5) in seiner Tieflage in einer Steckverbindung mit der fahrerhausfesten nterlage (9) steht.

7. Ablage nach einem der Ansprüche 1 bis 6, dadurch gekennzeichnet, daß das Tischelement (5) einen oberen Umfangsrand (13) aufweist.

8. Ablage nach einem der Ansprüche 1 bis 7, dadurch gekennzeichnet, daß das Tischelement (5) aus stabilem Material gebildet ist.

9. Ablage nach Anspruch 8,
dadurch gekennzeichnet,
daß das Tischelement (5) an seiner Oberseite eine rutschfeste Einlage aufweist.

10. Ablage nach einem der Ansprüche 1 bis 9, dadurch gekennzeichnet,
daß die Teleskopanordnung (11) an der fahrerhausfesten Unterlage (9) und an einer Querstrebe (14) der Schwenkeinrichtung (7) angelenkt ist.

11. Ablage nach einem der Ansprüche 1 bis 10, dadurch gekennzeichnet,
daß die Teleskopanordnung (11) zwei Teleskoparme (15,16) umfaßt, von denen der eine Teleskoparm (15) einen Arretierbolzen (17) besitzt, der in der Hochlage des Tischelements (5) mit einer federvorgespannten Arretierlasche (18) am anderen Teleskoparm (16) selbsttätig in Eingriff bringbar und von Hand aus diesem Eingriff lösbar ist.

**Revendications**

1. Tablette (1) pour véhicules automobiles située entre les deux sièges (3, 4) d'un véhicule poids lourd (2) pourvue d'un élément de table (5), qui peut être déplacée d'une position basse essentiellement horizontale située à l'arrière, suivant la direction longitudinale du véhicule, en une position avant plus haute essentiellement horizontale, dans laquelle elle repose sur l'appui avant de la cabine (6), caractérisée en ce que l'élément de table (5) est articulé pivotement (7) autour d'un premier axe tranxversal (8), le dispositif de pivotement (7) étant lui-même, articulé sur une base (9) et le dispositif de pivotement (7), un dispositif télescopique (11) qui bloque le dispositif de pivotement (7), y compris l'élément de table (5), dans sa position relevée, appuyé sur l'appui avant de la cabine (6).

2. Tablette selon la revendication 1, caractèrisèe en ce que le dispositif de pivotement (7) a une position essentiellement verticale dans la position relevèe de l'èlèment de table (5) appuyè sur l'appui avant de la cabine.

3. Tablette selon la revendication 1 ou 2, caractérisée en ce que le dispositif de pivotement (7) est un étrier en forme de U dont les extrémités libres déterminent le premier axe transversal (8) et dont la base détermine le deuxième axe transversal (10).

4. Tablette selon l'une des revendications 1 à 3, caractérisée en ce que l'élément de table (5) présente sur sa face inférieure, un évidement transversal (12) avant qui peut être mis en prise d'appui avec la face supérieure de l'appui de la cabine (6) (figures 2, 3).

5. Tablette selon la revendication 4, caractérisée en ce que l'évidement transversal (12) bloque en direction longitudinale du véhicule, un élément de table (5) se trouvant dans sa position haute.

6. Tablette selon l'une des revendications 1 à 5, caractérisée en ce que, dans sa position basse, l'élément de table (5) est maintenu par enfichage sur la base (9) fixée dans la cabine.

7. Tablette selon l'une des revendications 1 à 6, caractérisée en ce que l'élément de table (5) présente un bord supérieur d'entourage (13).

8. Tablette selon l'une des revendications 1 à 7,
caractérisée en ce que l'élément de table (5) est constitué en une matière solide.

9. Tablette selon la revendication 8, caractérisée en ce que l'élément de table (5) présente sur sa face supérieure une garniture anti-dérapante.

10. Tablette selon l'une des revendications 1 à 9, caractérisée en ce que le dispositif télescopique (11) est articulé sur la base (9) fixée dans la cabine et sur une traverse (14) du dispositif de pivotement.

11. Tablette selon l'une des revendications 1 à 10, caractérisée en ce que le dispositif télescopique (11) comporte deux bras télescopiques (15, 16) dont l'un (15) possède une cheville d'arrêt (17) qui, en position haute de l'élément de table (5), peut être mise automatiquement en prise avec l'autre bras (16) au moyen d'une éclisse d'arrêt (18) précontrainte par ressort et peut être détachée à la main de cette prise.

**Claims**

1. A shelf arrangement for a motor vehicle, more particularly in the intermediate shaft area of a lorry (2) between the driver's seat (3) and the co-driver's seat (4) and comprising a table element (5) which can be moved from a low subsantially horizontal position to the rear in the longitudinal direction of the vehicle to a raised forward substantially horizontal position in which it rests on the dashboard (6) of the driver's cabin, characterised in that the rear edge region of the table element (5) is pivoted about a first transverse axis (8) by a pivoting device (7) which in turn is pivoted about a second transverse axis (10) on a base (9) secured to the driver's cabin, and a telescopic arrangement (11) is disposed between the base (9) and the pivoting device (7) and locks the pivoting device (7) and table element (5) by the dashboard (6) when the table element is in the raised position.

2. A shelf arrangement according to claim 1, characterised in that when the table element (5) is in its raised position supported on the dashboard (6), the pivoting device (7) is disposed substantially vertically.

3. A shelf arrangement according to claim 1 or claim 2, characterised in that the pivoting device (7) is a U-shaped member having free ends defining the first transverse axis (8) and a base defining the second transverse axis (10).

4. A shelf arrangement according to any one of claims 1 to 3, characterised in that the underside of the table element (5) has a front transverse recess (12) for bringing into supporting engagement with the top surface of the dashboard (6) in the driver's cabin (Figs. 2 and 3).

5. A shelf arrangement according to claim 4, characterised in that the transverse recess (12) retains the table element (5) in its upper position in the longitudinal direction of the vehicle.

6. A shelf arrangement according to any one of claims 1 to 5, characterised in that the table element, when in the low position, is connected by a plug-in connection to the base (9) secured to the driver's cabin.

7. A shelf arrangement according to any one of claims 1 to 6, characterised in that the table element (5) has a raised peripheral edge 13.

8. A shelf arrangement according to any one of claims 1 to 7, characterised in that the table element (5) is made of rigid material.

9. A shelf arrangement according to claim 8, characterised in that the table element (5) has a non-slip insert on its upper surface.

10. A shelf arrangement according to any one of claims 1 to 9, characterised in that the telescopic arrangement (11) is pivoted to the base (9) secured to the driver's cabin and is also pivoted to a transverse cross-bar (14) of the pivoting device.

11. A shelf arrangement according to any of claims 1 to 10, characterised in that the telescopic arrangement (11) has two telescoping arms (15, 16), a first of which (15) having a locking pin (17) which can automatically be brought into engagement with and manually released from engagement with a spring-biased locking shackle (18) on the other telescopic arm (16) when the table element (5) is in the raised position.

Fig.1

Fig.2

# Fig.3

# Fig.4